# EUROPÄISCHE PATENTANMELDUNG

(11) **EP 3 542 885 A2**
(43) Veröffentlichungstag der Anmeldung: **25.09.2019**
(21) Anmeldenummer: 19163610.9
(22) Anmeldetag: 19.03.2019
(51) Int. Cl.: B01D 39/20

(54) **FILTERELEMENT MIT FILTERMATERIAL UND HERSTELLUNGSVERFAHREN**

(30) Priorität: 20.03.2018 DE 102018204261
(71) Anmelder: Filtration Group GmbH, 74613 Öhringen (DE)
(72) Erfinder: WIERLING, Reinhard, 74629 Pfedelbach (DE)
(74) Vertreter: BRP Renaud & Partner mbB Rechtsanwälte Patentanwälte Steuerberater

(57) **Zusammenfassung**

Die vorliegende Erfindung betrifft ein Filtermaterial (1) zum Filtern einer Flüssigkeit, insbesondere eines Kohlenstoff-basierten Schmieröls (3), mit einem von der zu filternden Flüssigkeit durchströmbaren Filtermedium (2), das Glasfasern (6) aufweist oder durch Glasfasern (6) gebildet ist.

Das Schauverhalten der Flüssigkeit lässt sich reduzieren, wenn die Glasfasern (6) an ihrer außenliegenden Oberfläche (7) mit einem Silikonöl (8) belegt sind.

## Beschreibung

Die vorliegende Erfindung betrifft ein Filtermaterial zum Filtern einer Flüssigkeit gemäß dem Oberbegriff des Anspruchs 1. Die Erfindung betrifft außerdem ein Filterelement zum Filtern einer Flüssigkeit, das mit einem derartigen Filtermaterial ausgestattet ist. Ferner betrifft die Erfindung ein Schmierölsystem für eine Maschine mit einer Filtereinrichtung, die mit einem derartigen Filterelement ausgestattet ist. Die Erfindung betrifft außerdem ein Verfahren zum Herstellen eines derartigen Filtermaterials bzw. zum Herstellen eines derartigen Filterelements. Schließlich betrifft die Erfindung noch eine Verwendung eines derartigen Filterelements.

In einer Vielzahl unterschiedlicher Maschinen kommt Schmieröl zum Einsatz. Beispielsweise kann bei einer Brennkraftmaschine Schmieröl zum Schmieren der Kolben in den Zylindern bzw. in Zylinderlaufbuchsen zum Einsatz kommen. Ebenso bei Maschinen, die ein Getriebe aufweisen oder durch ein Getriebe gebildet sind, kommt Schmieröl zur Schmierung von ineinandergreifenden Verzahnungen zum Einsatz. Das Getriebe befindet sich dabei in einem Getrieberaum oder Getriebegehäuse, das in der Regel zum Teil mit dem Schmieröl befüllt ist, während der üblicherweise größere Rest des Volumens mit einem Gas, vorzugsweise mit Luft befüllt ist. Während des Betriebs der Maschine bzw. während des Betriebs des Getriebes wird Luft in das Schmieröl eingeschlagen, so dass das Schmieröl aufschäumt. Hierdurch werden Luftbläschen in das Schmieröl eingetragen, die im Getriebe zwischen Zahnflanken von ineinander eingreifenden Verzahnungen geraten. Aufgrund hoher Pressungen zwischen miteinander zusammenwirkenden Zahnflanken können die Luftbläschen die Schmierung zwischen den Gleitpartnern bzw. Gleitflächen beeinträchtigen. Dies kann zu mechanischen Beschädigungen an den Zähnen der jeweiligen Verzahnung bzw. des Getriebes führen. Neben einer erhöhten Reibung bzw. einem erhöhten Abrieb durch die Luftbläschen kann es innerhalb der jeweiligen Verzahnung durch die Luftbläschen auch zu Kavitationseffekten kommen, die ebenfalls zu Beschädigungen an den Gleitflächen und somit an den Zähnen der Verzahnungen des Getriebes führen können.

Um der Schaumbildung im Schmieröl einer Maschine, vorzugsweise eines Getriebes, entgegenzuwirken, kann dem Schmieröl ein Antischaummittel zugegeben werden. Ein derartiges Antischaummittel, das auch als Schaumverhüter oder Entschäumer bezeichnet werden kann, reduziert die Schaumbildung im Schmieröl. Für die Quantifizierung des Schaumverhaltens im Schmieröl existiert eine Norm, die ISO 12152. Der darin beschriebene Test zur Quantifizierung des Schauverhaltens wird in Fachkreisen auch als "Flender-Schaumtest" bezeichnet. Zum Bestehen des Schaumtests darf das Schmieröl eine vorgeschriebene Schaumgrenze nicht überschreiten. Mit anderen Worten, die Werte des Schaumverhaltens des Schmieröls dürfen eine vorgeschriebene Schaumwertgrenze nicht überschreiten.

Zur Schmierung von Maschinen kommen häufig Schmierölsysteme zum Einsatz, die einen Schmierölkreis aufweisen, in dem das Schmieröl zirkuliert. Ein derartiges Schmierölsystem umfasst regelmäßig eine Filtereinrichtung, die so in den Schmierölkreis eingebunden ist, dass mit Hilfe der Filtereinrichtung das Schmieröl gefiltert werden kann. An den Schmierstellen können, insbesondere durch Abrieb, Verunreinigungen in das Schmieröl gelangen, die mit Hilfe der Filtereinrichtung aus dem Schmieröl herausgefiltert werden können. In einer solchen Filtereinrichtung kommen Filterelemente zum Einsatz, die einen vom Schmieröl durchströmbaren Filterkörper aufweisen, der durch ein Filtermaterial gebildet ist, das bei seiner Durchströmung die im Schmieröl mitgeführten Verunreinigungen zurückhält.

Ein gattungsgemäßes Filtermaterial ist beispielsweise aus der DE 198 54 565 A1 bekannt. Es umfasst ein Filtermedium, das Glasfasern aufweist oder durch Glasfasern gebildet ist.

Filtermaterialien, die ein Filtermedium auf Glasfaser-Basis besitzen, haben sich in der Praxis zum Filtern von Schmierölen bewährt. Als Schmieröle kommen bei Maschinen bevorzugt kohlenstoffbasierte Schmieröle zum Einsatz, also vorwiegend Mineralöle bzw. mineralische Schmieröle.

Aus der GB 846 495 A ist ein Gasfilter bekannt, bei dem Fasern mit Silikonöl imprägniert werden, um den Druckverlust des Gasfilters zu reduzieren.

Aus der DE 696 34 687 T2 ist ein Luftfilter für Reinraumanwendungen bekannt, bei dem Glasfasern mit Silikonöl behandelt werden, um die Reinigungswirkung des Luffilters zu verbessern.

In der Praxis hat sich gezeigt, dass sich bei manchen Schmierölen das Schaumverhalten durch die Filtration verändert, bei anderen dagegen nicht. Die Veränderung des Schaumverhaltens der betroffenen Schmieröle liegt dabei in einer signifikanten Zunahme des Schaumverhaltens, die im Extremfall dazu führen kann, dass die im vorstehend genannten Schaumtest vorgeschriebene Schaumgrenze überschritten wird.

Die vorliegende Erfindung beschäftigt sich mit dem Problem, für Schmieröle, deren Schaumverhalten durch die herkömmliche Filtration zunimmt, einen Weg aufzuzeigen, der diese Zunahme des Schaumverhaltens aufgrund der Filtration reduziert bzw. eliminiert. Hierzu soll die Erfindung ein geeignetes Filtermaterial bzw. ein geeignetes Filterelement bereitstellen, das eine ausreichende Filtration des Schmieröls ermöglicht, ohne dabei das Schaumverhalten des Schmieröls auf unzulässige Werte zu erhöhen. Ferner soll ein Schmierölsystem bereitgestellt werden, mit dessen Hilfe das Schmieröl zirkuliert und gefiltert werden kann, ohne dabei einen unzulässig hohen Anstieg des Schaumverhaltens zu riskieren. Des Weiteren sollen Verfahren zum Herstellen eines solchen Filtermaterials bzw. zum Herstellen eines solchen Filterelements bereitgestellt werden. Außerdem soll eine Verwendung für ein derartiges Filterelement vorgestellt werden, die ebenfalls zu einer Reduzierung der Zunahme des Schaumverhaltens im Schmieröl bei dessen Filtration führt.

Erfindungsgemäß wird dieses Problem durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Ölfiltermaterial, dessen Filtermedium Glasfasern aufweist, die Glasfasern des Filtermediums an ihrer außenliegenden Oberfläche mit einem Silikonöl zu belegen. Die außenliegende Oberfläche ist dabei die Oberfläche der Glasfasern, die während des Filtrationsbetriebs mit der Flüssigkeit bzw. mit dem Schmieröl in Kontakt kommt. Die Belegung der außenliegenden Oberfläche der Glasfasern mit Silikonöl erfolgt dabei zum Reduzieren der Schaumbildung in einem Kohlenstoffbasierten Schmieröl, das insbesondere ein Silikon-basiertes Antischaummittel enthalten kann.

Der Begriff "Silikonöl" bezeichnet dabei in üblicher Weise Diorganopolysiloxane, also polymerisierte Siloxane mit organischen Seitenketten. Es handelt sich somit um synthetische Silizium-basierte Öle, also Öle ohne organische, also Kohlenstoff-basierte Kettenmoleküle, sondern mit Siloxan-basierten Kettenmolekülen.

Beim Glas der Glasfasern handelt es sich in üblicher Weise um Silikat-Glas, also Glas aus Siliziumdioxid.

Die Erfindung nutzt hierbei die aus einer Vielzahl von Tests der Anmelderin gewonnene Erkenntnis, dass eine unzulässig hohe Zunahme des Schaumverhaltens vorwiegend bei Kohlenstoff-basierten Schmierölen zu beobachten ist, die mit einem Antischaummittel versehen sind. Besonders hohe Zunahmen im Schaumverhalten waren dann zu beobachten, wenn das zugegebene Antischaummittel eine Substanz auf Silikonbasis ist. Weitere Untersuchungen der Anmelderin haben dann zu der Erkenntnis geführt, dass sich bei Kohlenstoff-basierten Schmierölen mit Silikon-basierten Antischaummitteln eine signifikante Reduzierung der Zunahme der Schaumbildung während der Filtration erreichen lässt, wenn die Oberfläche der Glasfasern des Filtermaterials mit Silikonöl belegt sind. Auch Langzeitversuche der Anmelderin belegen, dass das Schaumverhalten dieser Schmieröle auch bei langen Standzeiten dieses Filtermaterials nicht auf unzulässige Werte ansteigt.

Erklärt wird dieses Phänomen derzeit mit der Vermutung, dass die Filtration des Schmieröls mit herkömmlichen Filtermaterialien das Antischaummittel aus dem Schmieröl abscheidet, so dass das Schaumverhalten allmählich zunimmt. Die erfindungsgemäße Belegung der außenliegenden Oberfläche der Glasfasern mit Silikonöl führt nun dazu, dass die Silikon-basierten Antischaummittel im Schmieröl während der Filtration nicht bzw. nicht in einem nennenswerten Umfang am Filtermaterial aus dem Schmieröl abgeschieden werden, so dass deren schaumdämpfende Wirkung im Schmieröl dauerhaft erhalten bleibt. Gegenversuche der Anmelderin bestätigen die vorstehende Vermutung und haben gezeigt, dass bei der Verwendung herkömmlicher Filtermaterialien der Gehalt an Silizium-basierten Antischaummitteln im Schmieröl durch die Filtration abnimmt, wodurch das Schaumverhalten des Schmieröls zunimmt. Da die Filtrationswirkung des Filtermaterials viel zu gering ist, um das Antischaummittel aus dem Schmieröl herausfiltern zu können, müssen hierbei andere Effekte wirken. Ein Klärungsversuch besteht darin, dass die Glasfasern möglicherweise eine gewisse Adsorptionswirkung für die Silikon-basierten Antischaummittel aufweisen. Somit werden die Antischaummittel an den Glasfasern dauerhaft gebunden. Diese Adsorption der Silikon-basierten Antischaummittel im Filtermedium unterbleibt zumindest größtenteils, wenn die außenliegenden Oberflächen der Glasfasern erfindungsgemäß mit Silikonöl belegt werden.

Gemäß einer vorteilhaften Ausführungsform ist das Filtermedium mit einer Menge an Silikonöl belegt, die in einem Bereich von 2 g/m² bis 4 g/m² liegt. Bevorzugt liegt die Menge an Silikonöl zur Belegung des Filtermediums in einem Bereich von 2,4 g/m² bis 3,6 g/m². Besonders bevorzugt liegt die Menge an Silikonöl am Filtermedium in einem Bereich von 2,75 g/m² bis 3,25 g/m². Mit anderen Worten, das Filtermedium wird zweckmäßig mit einer Menge von Silikonöl von etwa 3 g/m² belegt.

Gemäß einer vorteilhaften Ausführungsform kann das Filtermedium ein Glasfaservlies sein oder ein Glasfaservlies aufweisen. Ein derartiges Glasfaservlies zeichnet sich durch eine extrem hohe Oberfläche und einen hohen Filtrationsgrad aus.

Besonders vorteilhaft hat sich herausgestellt, wenn das Silikonöl zum Belegen der Glasfasern Polydimethylsiloxan ist oder aufweist.

Ein erfindungsgemäßes Ölfiltermaterial, das zum Filtern eines Öls, insbesondere eines Kohlenstoff-basierten Schmieröls, geeignet ist, besitzt somit ein von der zu filternden Flüssigkeit durchströmbares Filtermedium, das Glasfasern aufweist oder durch Glasfasern gebildet ist, wobei die Glasfasern an ihrer außenliegenden Oberfläche zum Reduzieren der Schaumbildung in einem Kohlenstoff-basierten Schmieröl, das insbesondere ein Silikon-basiertes Antischaummittel enthalten kann, mit einem Silikonöl belegt sind.

Ein erfindungsgemäßes Ölfilterelement, das zum Filtern eines Öls, insbesondere eines Kohlenstoff-basierten Schmieröls, geeignet ist, besitzt einen von dem zu filternden Öl durchströmbaren Filterkörper, der ein Filtermaterial der vorstehend beschriebenen Art aufweist.

Gemäß einer vorteilhaften Ausführungsform kann das Filterelement als Plattenfilterelement ausgestaltet sein, bei dem der Filterkörper eben ausgestaltet ist. Ferner kann der ebene Filterkörper im Wesentlichen rechteckig ausgestaltet sein. Der rechteckige Querschnitt bezieht sich dabei auf den durchströmten Querschnitt des Filterkörpers. Ein derartiges Plattenfilterelement kann ferner einen Rahmen aufweisen, der den Filterkörper einfasst. Zusätzlich oder alternativ kann eine Dichtung vorgesehen sein, die den Filterkörper entlang seines Umfangs einfasst.

Bei einer anderen Ausführungsform kann das Filterelement als Ringfilterelement ausgestaltet sein, bei dem der Filterkörper ringförmig ausgestaltet und radial durchströmbar ist. Ein derartiges Ringfilterelement kann außerdem an seinen axialen Enden jeweils eine Endscheibe aufweisen, wobei zumindest eine dieser Endscheiben als offene Endscheibe konfiguriert ist, die eine zentrale Öffnung aufweist, die zu dem vom ringförmigen Filterkörper umschlossenen Innenraum offen ist. Zusätzlich kann das Ringfilterelement mit einer Innenzarge ausgestattet sein, an der sich der ringförmige Filterkörper radial innen abstützt. Zusätzlich oder alternativ kann das Ringfilterelement mit einer Außenzarge ausgestattet sein, an der sich der ringförmige Filterkörper radial außen abstützt. Derartige Ringfilterelemente, die durch eine Innenzarge und/oder eine Außenzarge verstärkt sind, eignen sich für vergleichsweise hohe Differenzdrücke zwischen Rohseite und Reinseite in der Flüssigkeit.

Unabhängig von der Form des jeweiligen Filterkörpers ist es zweckmäßig, das Filtermaterial zu falten bzw. zu plissieren, um die für die Filtration zur Verfügung stehende Oberfläche signifikant zu vergrößern.

Ein erfindungsgemäßes Schmierölsystem, das für eine Maschine geeignet ist, umfasst einen Ölkreis, in dem ein Kohlenstoff-basiertes Schmieröl während des Betriebs des Schmierölsystems zirkuliert. Ferner umfasst das Schmierölsystem eine Filtereinrichtung zum Filtern des Schmieröls, die zumindest ein Filterelement der vorstehend beschriebenen Art enthält. Der Ölkreis weist nun einen Vorlauf auf, der das Schmieröl von einem Auslass der Filtereinrichtung zu wenigstens einer Schmierstelle der Maschine führt. Ferner umfasst der Ölkreis einen Rücklauf, der das Schmieröl von der jeweiligen Schmierstelle zu einem Einlass der Filtereinrichtung führt. Während des Betriebs des Schmierölsystems strömt das Schmieröl somit von der Filtereinrichtung zur jeweiligen Schmierstelle und danach von der jeweiligen Schmierstelle zurück zur Filtereinrichtung. Das Schmierölsystem kann eine Fördereinrichtung, vorzugsweise eine Schmierölpumpe aufweisen, die im Ölkreis angeordnet ist, vorzugsweise im Rücklauf, um das Schmieröl im Ölkreis anzutreiben.

Bevorzugt ist eine Ausführungsform, bei welcher die Maschine ein Getriebe ist oder ein Getriebe aufweist, das mit dem Schmieröl zu schmieren ist. Mit anderen Worten, die Schmierstellen befinden sich im Getriebe. Zweckmäßig ist ein derartiges Getriebe in einem Gehäuse angeordnet. Der Vorlauf ist dann an einen Gehäuseeinlass angeschlossen, während der Rücklauf an einen Gehäuseauslass angeschlossen ist.

Besonders vorteilhaft ist eine Ausgestaltung, bei welcher das Schmieröl ein Antischaummittel auf Silikonbasis enthält. Das Antischaummittel kann dabei als Emulsion oder als Pulver dem Schmieröl zugemischt sein.

Gemäß einer vorteilhaften Ausführungsform kann sich das Silikonöl, mit dem die Glasfasern belegt sind, von dem Silikonöl, welches die Silikonbasis des Antischaummittels bildet, oder von den Silikonölen, welche die Silikonbasis des Antischaummittels bilden, unterscheiden. Insbesondere für den Fall, dass das Silikonöl zum Belegen der Glasfasern durch Polydimethylsiloxan gebildet ist oder Polydimethylsiloxan aufweist, ist das Silikonöl, das die Silikonbasis des Antischaummittels bildet, nicht durch Polydimethylsiloxan gebildet, bzw. umfasst das Silikonöl, mit dem das Antischaummittel gebildet ist, kein Polydimethylsiloxan. Ebenso bildet Polydimethylsiloxan dann keinen Bestandteil einer Mischung, inbesondere einer Silikonölmischung, welche die Silikonbasis des Antischaummittels bildet.

Ein erfindungsgemäßes Verfahren zum Herstellen eines Ölfiltermaterials der vorstehend beschriebenen Art charakterisiert sich dadurch, dass die Glasfasern des Filtermediums an ihrer außenliegenden Oberfläche mit einem Silikonöl belegt werden. Die Belegung der außenliegenden Oberfläche der Glasfasern mit Silikonöl erfolgt dabei zum Reduzieren der Schaumbildung in einem Kohlenstoffbasierten Schmieröl, das insbesondere ein Silikon-basiertes Antischaummittel enthalten kann.

Eine vorteilhafte Ausführungsform dieses Verfahrens schlägt vor, das Belegen der Glasfasern mit Silikonöl dadurch zu realisieren, dass das Filtermedium oder das Filtermaterial durch ein Tauchbad mit Silikonöl hindurchgeführt wird. Hierdurch wird quasi eine Sättigung der außenliegenden Oberflächen der Glasfasern mit dem Silikonöl erreicht.

Alternativ dazu kann das Belegen der Glasfasern mit Silikonöl auch dadurch erfolgen, dass das Filtermedium oder das Ölfiltermaterial mit Silikonöl besprüht wird.

Ein erfindungsgemäßes Verfahren zum Herstellen eines Ölfilterelements der vorstehend beschriebenen Art charakterisiert sich dadurch, dass zum Herstellen des Filterkörpers dieses Ölfilterelements ein Ölfiltermaterial der vorstehend beschriebenen Art verwendet wird. Mit anderen Worten, zum Herstellen des Filterkörpers wird ein Filtermaterial verwendet, bei dem die Glasfasern bereits zum Reduzieren der Schaumbildung in einem Kohlenstoff-basierten Schmieröl, das insbesondere ein Silikon-basiertes Antischaummittel enthalten kann, mit Silikonöl belegt sind. Hierdurch lässt sich ein herkömmliches Verfahren zum Herstellen eines herkömmlichen Filterelements besonders einfach zu einem erfindungsgemäßen Verfahren zum Herstellen eines erfindungsgemäßen Filterelements umrüsten, indem anstelle eines herkömmlichen Filtermaterials das erfindungsgemäße Filtermaterial zugeführt wird. Der Filterkörper kann plattenförmig oder ringförmig ausgestaltet sein. Dass Ölfiltermaterial kann im Filterkörper bevorzugt plissiert bzw. gefaltet sein, um die Filterfläche zu vergrößern.

Ein anderes Verfahren zum Herstellen eines Ölfilterelements der vorstehend beschriebenen Art charakterisiert sich dadurch, dass der Filterkörper durch ein Tauchbad mit Silikonöl hindurchgeführt wird oder dadurch, dass der Filterkörper mit Silikonöl besprüht wird. Mit anderen Worten, hier wird ein herkömmliches Verfahren zum Herstellen eines herkömmlichen Filterelements dadurch zu einem erfindungsgemäßen Verfahren zum Herstellen eines erfindungsgemäßen Filterelements umgerüstet, dass ein zusätzlicher Verfahrensschritt hinzugefügt wird, bei dem die Belegung der Glasfasern im Filtermedium des Filtermaterials des Filterkörpers mit Silikonöl erfolgt. Auch hier kann der Filterkörper plattenförmig oder ringförmig konfiguriert sein und/oder mit gefaltetem Ölfiltermaterial ausgestattet sein.

Eine besonders vorteilhafte Ausführungsform dieses Verfahrens schlägt vor, dass das Ölfilterelement durch die Belegung mit dem Silikonöl fertig gestellt wird. Das bedeutet, dass vor dem letzten Verfahrensschritt des Verfahrens noch ein herkömmliches Ölfilterelement vorliegt, das erst mit diesem letzten Verfahrensschritt zu einem erfindungsgemäßen Ölfilterelement wird. Auf diese Weise lässt sich die vorliegende Erfindung besonders einfach in konventionelle Fertigungsverfahren implementieren.

Eine erfindungsgemäße Verwendung schlägt vor, ein Ölfilterelement der vorstehend beschriebenen Art in einem Schmierölkreis zu verwenden, in dem ein Kohlenstoff-basiertes Schmieröl zirkuliert. Auf diese Weise lässt sich besonders einfach ein herkömmlicher Schmierölkreis zu einem erfindungsgemäßen Schmierölkreis modifizieren, indem anstelle eines herkömmlichen Ölfilterelements ein erfindungsgemäßes Ölfilterelement zum Einsatz kommt.

Besonders vorteilhaft ist eine Ausführungsform, bei welcher das Schmieröl ein Antischaummittel auf Silikonbasis enthält. Bevorzugt wird auch hier die Variante, bei der sich die Silikonbasis des Antischaummittels vom Silikonöl unterscheidet, mit dem die Glasfasern belegt sind. Beispielsweise umfasst das Silikonöl auf den Glasfasern Polydimethylsiloxan oder ist dadurch gebildet, während die Silikonbasis kein Polydimethylsiloxan enthält.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen stark vereinfachten, prinzipiellen Querschnitt eines Filtermaterials,
- Fig. 2: ein stark vergrößertes Detail II aus Fig. 1 im Bereich eines Filtermediums,
- Fig. 3: eine isometrische Ansicht eines Filterelements,
- Fig. 4: eine isometrische Ansicht des Filterelements, jedoch bei einer anderen Ausführungsform,
- Fig. 5: eine stark vereinfachte, schaltplanartige Prinzipdarstellung eines Schmierölkreises,
- Fig. 6: ein vereinfachtes Flussdiagram zur Veranschaulichung eines Verfahrens zur Herstellung des Filtermaterials,
- Fig. 7: ein vereinfachtes Flussdiagram zur Veranschaulichung eines ersten Verfahrens zur Herstellung des Filterelements,
- Fig. 8: ein vereinfachtes Flussdiagram zur Veranschaulichung eines zweiten Verfahrens zur Herstellung des Filterelements.

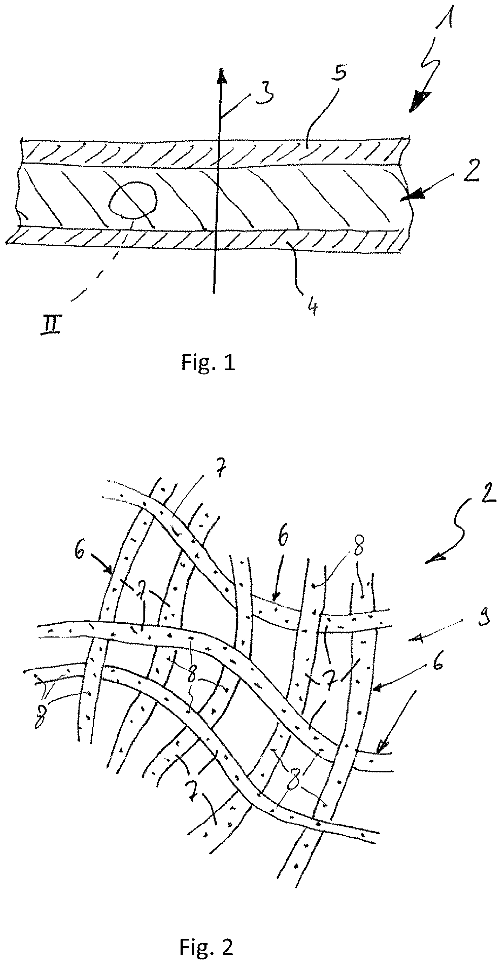

Entsprechend Figur 1 umfasst ein Ölfiltermaterial 1, mit dessen Hilfe ein Kohlenstoff-basiertes Schmieröl gefiltert werden kann, ein Filtermedium 2, das von der zu filternden Flüssigkeit, also vorzugsweise von dem Schmieröl, durchströmbar ist. Das Schmieröl bzw. eine entsprechende Schmierölströmung ist in Figur 1 durch einen Pfeil angedeutet und mit 3 bezeichnet. Im gezeigten Beispiel der Figur 1 ist das Filtermaterial 1 dreilagig aufgebaut, derart, dass das Filtermedium 2 beispielsweise zwischen einer anströmseitigen Schutzschicht oder Tragschicht 4 und einer abströmseitigen Schutzschicht oder Tragschicht 5 angeordnet ist. Es ist klar, dass auch eine einlagige Ausgestaltung des Filtermaterials 1 denkbar ist, bei der das Filtermaterial 1 ausschließlich aus dem Filtermedium 2 besteht. Ebenso ist eine zweilagige Ausgestaltung denkbar. Ferner sind auch Ausgestaltungen mit vier oder mehr Lagen denkbar.

Das Filtermedium 2 weist gemäß der vergrößerten Darstellung in Figur 2 Glasfasern 6 auf. Ebenso können zusätzlich andere Fasern (nicht gezeigt) im Filtermedium 2 vorhanden sein. Ebenso ist eine Tragstruktur (nicht gezeigt) zum Halten der Glasfasern 6 innerhalb des Filtermediums 2 denkbar. Bevorzugt ist jedoch eine Ausführungsform, bei welcher das Filtermedium 2 durch die Glasfasern 6 gebildet ist. Die Glasfasern 6 besitzen eine bei der Durchströmung des Filtermaterials 1 bzw. des Filtermediums 2 dem Schmieröl 3 ausgesetzte außen liegende Oberfläche 7. Beim hier vorgestellten Filtermaterial 1 ist diese außen liegende Oberfläche 7 der Glasfasern 6 mit einem Silikonöl 8 belegt. Die Belegung der Oberfläche 7 der Glasfasern 6 mit Silikonöl 8 ist in Figur 2 durch Punkte an der Oberfläche 7 symbolisiert. Das Silikonöl 8 ist an den Glasfasern 6 durch Adhäsion und/oder durch Adsorption gehalten.

Die Menge an Silikonöl 8, mit der das Filtermedium 2 belegt ist, liegt in einem Bereich von 1 g/m² bis 5 g/m², insbesondere in einem Bereich von 2 g/m² bis 4 g/m². Vorzugsweise liegt die Belegung des Filtermediums 2 mit Silikonöl 8 bei etwa 3 g/m². Als Silikonöl 8 zum Belegen der Glasfasern 6 wird bevorzugt Polydimethylsiloxan verwendet oder ein Gemisch, insbesondere ein Silikonölgemisch, das Polydimethylsiloxan enthält.

Das Filtermedium 2 kann dabei als Glasfaservlies 9 ausgestaltet sein.

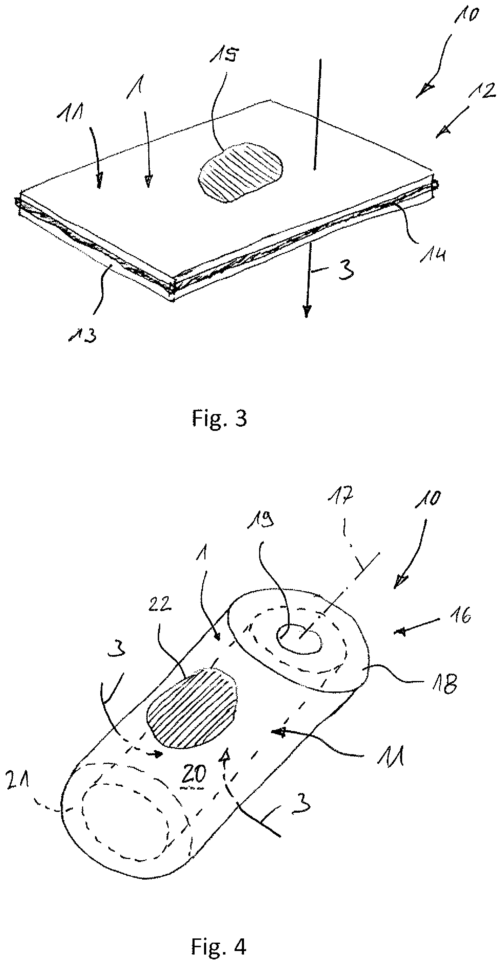

Die Figuren 3 und 4 zeigen jeweils ein Ölfilterelement 10 zum Filtern der Flüssigkeit, also vorzugsweise des kohlenstoffbasierten Schmieröls. Das jeweilige Filterelement 10 weist einen Filterkörper 11 auf, der von der zu filternden Flüssigkeit, also vom Schmieröl 3 durchströmbar ist. Eine entsprechende Durchströmung mit dem Schmieröl ist in den Figuren 3 und 4 wieder durch Pfeile 3 angedeutet. Dieser Filterkörper 11 weist ein Filtermaterial 1 der vorstehend beschriebenen Art auf oder ist insgesamt durch dieses Filtermaterial 1 gebildet. Im Beispiel der Figur 3 ist das Filterelement 10 als Plattenfilterelement 12 ausgestaltet, das sich durch einen ebenen und insbesondere rechteckigen Filterkörper 11 auszeichnet. Beim Plattenfilterelement 12 kann der Filterkörper 11 von einem umlaufenden Seitenstreifen 13 nach Art eines abdichtenden Rahmens eingefasst sein. Zusätzlich oder alternativ kann am Filterkörper 10 eine umlaufende Dichtung 14 ausgebildet sein, um das Filterelement 10 im eingebauten Zustand gegenüber einem Filtergehäuse abzudichten. Im Beispiel der Figur 3 ist die Dichtung 14 außen am Seitenstreifen 13 angebracht. Das Filtermaterial 1 kann im Filterkörper 11 gefaltet sein, was in Figur 3 in einem Bereich 15 angedeutet ist. Es ist klar, dass das Filtermaterial 1 im gesamten Filterkörper 11 gefaltet ist.

Figur 4 zeigt eine andere Ausführungsform des Filterelements 10, bei der das Filterelement 10 als Ringfilterelement 16 ausgestaltet ist. Bei einem derartigen Ringfilterelement 16 ist der Filterkörper 11 ringförmig ausgestaltet, wodurch eine Axialrichtung durch eine Längsmittelachse 17 des Ringfilterelements 16 definiert wird. Die Axialrichtung erstreckt sich parallel zur Längsmittelachse 17. Der Filterkörper 11 ist nun radial, also senkrecht zur Axialrichtung und insbesondere senkrecht zur Längsmittelachse 17 durchströmbar. In Figur 4 ist eine Durchströmung radial von außen nach innen angedeutet. Das Ringfilterelement 16 kann an einer in Figur 4 dem Betrachter zugewandten axialen Stirnseite eine offene Endscheibe 18 aufweisen, die eine zentrale Durchgangsöffnung 19 besitzt, durch die hindurch eine kommunizierende Verbindung mit einem vom ringförmigen Filterkörper 11 eingefassten Innenraum 20 des Ringfilterelements 16 möglich ist. An einer in Figur 4 vom Betrachter abgewandten axialen Stirnseite weist das Ringfilterelement 16 im Beispiel eine geschlossene Endscheibe 21 auf, die den Innenraum 20 axial verschließt. Das Ringfilterelement 16 kann bei einer Durchströmung von außen nach innen zweckmäßig mit einer Innenzarge (nicht gezeigt) ausgestattet sein, an der sich der Filterkörper 11 radial innen abstützen kann. Auch hier ist das Filtermaterial 1 zweckmäßig gefaltet. Die Falten erstrecken sich parallel zur Längsmittelachse 17. Auch in Figur 4 sind die Falten des Filtermaterials 1 nur in einem Bereich 22 erkennbar. Es ist klar, dass das Filtermaterial 1 im gesamten Filterkörper 11 gefaltet ist.

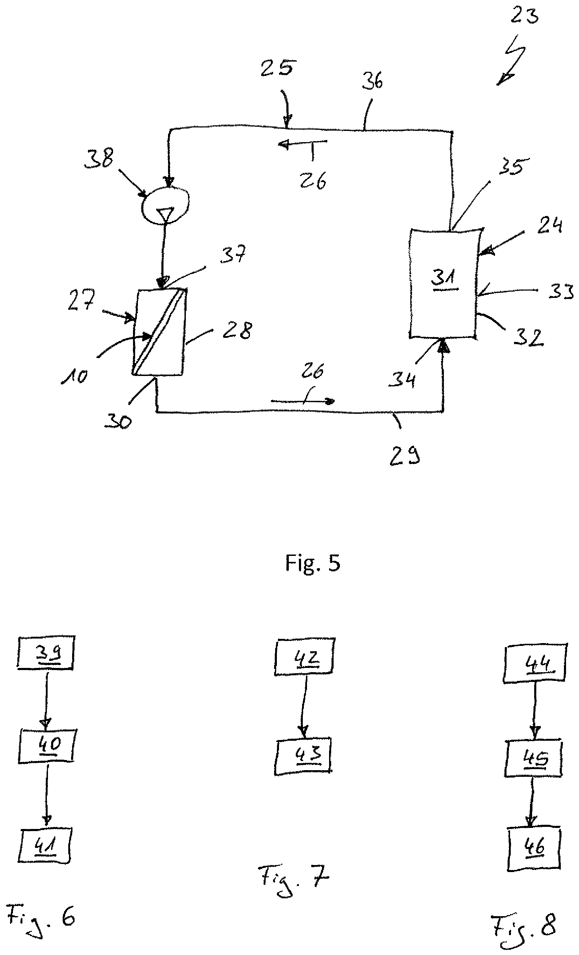

Gemäß Figur 5 umfasst ein Schmierölsystem 23 für eine Maschine 24 einen Ölkreis 25, in dem während des Betriebs des Schmierölsystems 23 ein Kohlenstoff-basiertes Schmieröl 3 gemäß Pfeilen 26 zirkuliert. Das Schmierölsystem 23 weist ferner eine Filtereinrichtung 27 zum Filtern des Schmieröls 3 auf, die in einem Filtergehäuse 28 zumindest ein Filterelement 10 der vorstehend beschriebenen Art enthält. Ein Vorlauf 29 des Ölkreises 25 verbindet einen Auslass 30 der Filtereinrichtung 28 mit wenigstens einer Schmierstelle 31 der Maschine 24. Beispielsweise besitzt die Maschine 24 ein Getriebe 32 oder ist durch das Getriebe 32 gebildet. Das Getriebe 32 ist mit dem Schmieröl 3 zu schmieren und besitzt die jeweilige Schmierstelle 31. Das Getriebe 32 ist in einem Getriebegehäuse 33 angeordnet, das einen Gehäuseeinlass 34 für Schmieröl 3 und einen Gehäuseauslass 35 für Schmieröl 3 aufweist. Dementsprechend ist der Vorlauf 29 an den Gehäuseeinlass 34 angeschlossen. Ein Rücklauf 36 des Ölkreises 25 führt das Schmieröl 3 von der jeweiligen Schmierstelle 31 zu einem Einlass 37 der Filtereinrichtung. Mit anderen Worten, der Rücklauf 36 verbindet den Gehäuseauslass 35 mit dem Einlass 37 der Filtereinrichtung 27.

Des Weiteren ist im Ölkreis 25, zweckmäßig im Rücklauf 36, eine Fördereinrichtung 38, nämlich eine Schmierölpumpe angeordnet, die das Schmieröl 3 im Ölkreis 25 antreibt.

Während des Betriebs der Maschine 24 bzw. des Schmierölkreises 25 fördert die Fördereinrichtung 38 das Schmieröl 3 im Ölkreis 25, so dass stets gefiltertes Schmieröl 3 den Schmierstellen 31 der Maschine 24 bzw. des Getriebes 32 zugeführt wird. In der Filtereinrichtung 27 erfolgt eine Filtration des Schmieröls 3, um darin mitgeführte Verunreinigungen abzureinigen. Durch die Belegung der Glasfasern 6 des Filtermediums 2 mit dem Silikonöl 8 erhöht sich durch die Filtration das Schaumverhalten des Schmieröls 3 nicht oder nur unwesentlich. Dies gilt insbesondere dann, wenn das Schmieröl 2 ein Antischaummittel auf Silikonbasis enthält. Auf diese Weise kann mit Hilfe des hier verwendeten Filterelements 10 auch für lange Zeit eine unzulässige Zunahme des Schaumverhaltens im Schmieröl 3 trotz Filtration vermieden werden. Vorzugsweise unterscheidet sich die Silikonbasis des Antischaummittels vom Silikonöl 8, mit dem die Glasfasern 6 belegt sind.

Fig. 6 illustriert ein Verfahren zum Herstellen des Filtermaterials 1. In einem ersten Schritt 39 wird das Filtermedium 2 aus bzw. mit den Glasfasern 6 erzeugt. In einem zweiten Schritt 40 erfolgt die Belegung der Glasfasern 6 an ihrer Oberfläche 7 mit dem Silikonöl 8. In einem optionalen dritten Schritt 41 können die Schutz- oder Tragschichten 4, 5 hinzugefügt werden, um das Filtermaterial 1 zu bilden. Das Belegen der Glasfasern 6 mit Silikonöl 8 kann im zweiten Schritt 40 z.B. dadurch erfolgen, dass das Filtermedium 2 oder das Filtermaterial 1 durch ein Tauchbad mit Silikonöl 8 hindurchgeführt wird. Alternativ kann das Belegen der Glasfasern 6 mit Silikonöl 8 auch dadurch erfolgen, dass das Filtermedium 2 oder das Filtermaterial 1 mit Silikonöl 8 besprüht wird.

Fig. 7 illustriert ein erstes Verfahren zum Herstellen des Filterelements 10. In einem ersten Schritt 42 wird das bereits mit Silikonöl 8 belegte Filtermaterial 1 zugeschnitten. In diesem ersten Schritt 42 kann das Filtermaterial 1, zweckmäßig vor dem Schneiden, optional gefaltet werden. In einem zweiten Schritt 43 erfolgt der Zusammenbau des Filterelements 10. Bei einem Plattenfilterelement 12 werden der Seitenstreifen 13 und/oder die Dichtung 14 am Filterkörper 11 angebracht. Beim Ringfilterelement 16 werden die Endscheiben 18, 21 und gegebenenfalls die Innenzarge und/oder die Außenzarge angebracht.

Fig. 8 illustriert ein zweites Verfahren zum Herstellen des Filterelements 10. In einem ersten Schritt 44 wird ein herkömmliches, noch nicht mit Silikonöl 8 belegtes Filtermaterial zugeschnitten. In diesem ersten Schritt 44 kann das Filtermaterial, zweckmäßig vor dem Schneiden, optional gefaltet werden. In einem zweiten Schritt 45 erfolgt der Zusammenbau des Filterelements 10. Bei einem Plattenfilterelement 12 werden der Seitenstreifen 13 und/oder die Dichtung 14 am Filterkörper 11 angebracht. Beim Ringfilterelement 16 werden die Endscheiben 18, 21 und gegebenenfalls die Innenzarge und/oder die Außenzarge angebracht. In einem dritten Schritt 46 erfolgt die Belegung der Glasfasern 6 des Filtermediums 2 des Filtermaterials 1 mit Silikonöl 8. Diese Belegung mit dem Silikonöl 8 kann dadurch erfolgen, dass das Filterelement 10 durch ein Tauchbad mit Silikonöl 8 hindurchgeführt wird oder dass der Filterkörper 11 mit Silikonöl 8 besprüht wird.

## Patentansprüche

1. Ölfiltermaterial (1) zum Filtern eines Öls, insbesondere eines Kohlenstoffbasierten Schmieröls (3), mit einem von dem zu filternden Öl durchströmbaren Filtermedium (2), das Glasfasern (6) aufweist oder durch Glasfasern (6) gebildet ist,
**dadurch gekennzeichnet,**
**dass** die Glasfasern (6) an ihrer außenliegenden Oberfläche (7) mit einem Silikonöl (8) belegt sind.

2. Ölfiltermaterial nach Anspruch 1,
**dadurch gekennzeichnet,**
**dass** das Filtermedium (2) mit einer Menge an Silikonöl (8) belegt ist, die in einem Bereich von 2 g/m² bis 4 g/m², vorzugsweise von 2,4 g/m² bis 3,6 g/m², insbesondere von 2,75 g/m² bis 3,25 g/m², liegt.

3. Ölfiltermaterial nach Anspruch 1 oder 2,
**dadurch gekennzeichnet,**
**dass** das Filtermedium (2) ein Glasfaservlies (9) ist oder aufweist.

4. Ölfiltermaterial nach einem der Ansprüche 1 bis 3,
**dadurch gekennzeichnet,**
**dass** das Silikonöl (8) zum Belegen der Glasfasern (6) Polydimethylsiloxan ist oder aufweist.

5. Ölfilterelement (10) zum Filtern eines Öls, insbesondere eines Kohlenstoffbasierten Schmieröls, mit einem von dem zu filternden Öl durchströmbaren Filterkörper (11), der ein Ölfiltermaterial (1) nach einem der Ansprüche 1 bis 4 aufweist.

6. Schmierölsystem (23) für eine Maschine (24),
- mit einem Ölkreis (25), in dem ein Kohlenstoff-basiertes Schmieröl (26) zirkuliert,
- mit einer Filtereinrichtung (27) zum Filtern des Schmieröls (26), die zumindest ein Ölfilterelement (10) nach Anspruch 5 enthält,
- wobei der Ölkreis (25) einen Vorlauf (29) aufweist, der das Schmieröl (26) von einem Auslass (30) der Filtereinrichtung (28) zu wenigstens einer Schmierstelle (31) der Maschine (24) führt,
- wobei der Ölkreis (25) einen Rücklauf (36) aufweist, der das Schmieröl (26) von der jeweiligen Schmierstelle (31) zu einem Einlass (37) der Filtereinrichtung (27) führt.

7. Schmierölsystem nach Anspruch 6,
**dadurch gekennzeichnet,**
**dass** die Maschine (24) ein Getriebe (32) ist oder ein Getriebe (32) aufweist, das mit dem Schmieröl (26) zu schmieren ist.

8. Schmierölsystem nach Anspruch 6 oder 7,
**dadurch gekennzeichnet,**
**dass** das Schmieröl (26) ein Antischaummittel auf Silikonbasis enthält.

9. Schmierölsystem nach Anspruch 8,
**dadurch gekennzeichnet,**
**dass** sich das Silikonöl (8), mit dem die Glasfasern (6) belegt sind, von dem Silikonöl, welches die Silikonbasis des Antischaummittels bildet, oder von den Silikonölen, welche die Silikonbasis des Antischaummittels bilden, unterscheidet.

10. Verfahren zum Herstellen eines Ölfiltermaterials (1) nach einem der Ansprüche 1 bis 4, bei dem die Glasfasern (6) des Filtermediums (2) an ihrer außen liegenden Oberfläche (7) mit einem Silikonöl (8) belegt werden.

11. Verfahren nach Anspruch 10,
**dadurch gekennzeichnet,**
**dass** das Belegen der Glasfasern (6) mit Silikonöl (8) dadurch erfolgt, dass das Filtermedium (2) oder das Filtermaterial (1) durch ein Tauchbad mit Silikonöl (8) hindurchgeführt wird oder mit Silikonöl (8) besprüht wird.

12. Verfahren zum Herstellen eines Ölfilterelements (10) nach Anspruch 5, bei dem zum Herstellen des Filterkörpers (11) ein Ölfiltermaterial (1) nach einem der Ansprüche 1 bis 4 verwendet wird.

13. Verfahren zum Herstellen eines Ölfilterelements (10) zum Filtern eines Öls, insbesondere eines Kohlenstoff-basierten Schmieröls,
- wobei das Ölfilterelement (10) einen von der zu filternden Flüssigkeit durchströmbaren Filterkörper (11) aufweist, der ein Ölfiltermaterial (1) zum Filtern des Öls, insbesondere des Kohlenstoff-basierten Schmieröls (3), aufweist"
- wobei das Ölfiltermaterial (1) ein von dem zu filternden Öl durchströmbares Filtermedium (2) aufweist, das Glasfasern (6) aufweist oder durch Glasfasern (6) gebildet ist,
- bei dem der Filterkörper (11) durch ein Tauchbad mit Silikonöl (8) hindurchgeführt oder mit Silikonöl (8) besprüht wird.

14. Verfahren nach Anspruch 13,
**dadurch gekennzeichnet,**
**dass** das Filterelement (10) durch die Belegung mit dem Silikonöl (8) fertig gestellt wird.

15. Verwendung eines Ölfilterelements (10) nach Anspruch 5 in einem Schmierölkreis (25), in dem ein Kohlenstoff-basiertes Schmieröl (26) zirkuliert.
